# EUROPEAN PATENT APPLICATION

(11) **EP 4 847 161 A1**
(43) Date of publication of application: **02.12.2026**
(21) Application number: 24920277.1
(22) Date of filing: 21.10.2024
(51) Int. Cl.: B21J 5/00, B21J 3/00, B21K 23/00, C22C 21/02

(54) **METHOD FOR MANUFACTURING SCROLL MEMBER**

(30) Priority: 24.01.2024 JP 2024008640
(71) Applicant: Resonac Corporation, Tokyo 105-7325 (JP)
(72) Inventor: HOSHI, Toshiyuki, Tokyo 105-7325 (JP); ENDO, Daisuke, Tokyo 105-7325 (JP)
(74) Representative: Strehl & Partner mbB
(86) International application number: PCT/JP2024/037390
(87) International publication number: WO 2025/158730

(57) **Abstract**

This method for manufacturing a scroll member includes a forging step of forging a forging material formed of an aluminum alloy without swaging.

## Description

### TECHNICAL FIELD

The present invention relates to a method for manufacturing a scroll member.

Priority is claimed on Japanese Patent Application No. 2024-008640, filed January 24, 2024, the content of which is incorporated herein by reference.

### BACKGROUND ART

Scroll compressors are known as air conditioner compressors because scroll compressors have few components and high quietness in rotation. A scroll compressor is made up of, for example, a fixed scroll having a vane portion made of a spiral wall on one surface of a flat flange, and an oscillating scroll having a spiral vane portion in approximately the same shape that fits into the vane portion of the fixed scroll and oscillates.

These fixed scroll and oscillating scroll (hereinafter collectively referred to simply as a scroll member) are generally made of aluminum alloy from the viewpoint of weight reduction. Examples of a method for manufacturing such a scroll member include casting, forging, and the like. From the viewpoint of strength and reliability, it is preferable to manufacture the scroll member by forging, and because of the complexity of a shape of the scroll member, the scroll member is generally manufactured by hot forging (for example, Patent Document 1).

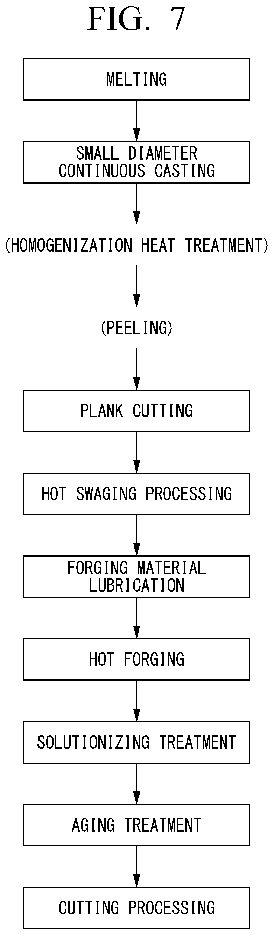

FIG. 7 is a diagram showing an example of a procedure of a conventional method for manufacturing a scroll member formed of an aluminum alloy and showing a procedure of a method for manufacturing a scroll member disclosed in Patent Document 1.

In the conventional method for manufacturing a scroll member, a flowchart of which is shown in FIG. 7, an alloy composition is first adjusted and then melted. The molten aluminum alloy is then cast by a continuous casting method into a billet (BL) having a diameter of 200 mm or more for extrusion. This BL is heat-treated to homogenize the inside thereof, and then cut into a predetermined length of an extrusion material. The cut billet is then extruded into a round bar (extruded round bar) with a predetermined diameter. This extruded round bar is lubricated with cutting oil and then cut into a forging material.

The forging material is hot-swaged at a high temperature to expand a diameter thereof to correspond to an outer diameter of a flange portion of the scroll member. The hot-swaged forging material is forged after a lubricant is applied to the forging material, which is a workpiece, and a die to prevent seizure on a surface thereof. Specifically, a liquid lubricant made by mixing graphite with water or mineral oil is applied or sprayed onto the forging material after the cutting oil applied to the surface has evaporated due to hot swaging. Furthermore, a liquid lubricant made by mixing graphite with water or mineral oil is applied or sprayed onto the die. The graphite in the liquid lubricant plays an important role in preventing seizure of the scroll member being formed and is considered to be an essential component for preventing lubrication shortage. In this state, the forging material is placed in the die and processed into a predetermined shape by hot forging in which pressure is applied in a heated environment. Thereafter, the forging material is hardened by ageing and then the surface thereof is cut into a scroll member in a predetermined shape.

### Citation List

### Patent Document

Patent Document 1: Japanese Patent No. 4744766

### SUMMARY OF INVENTION

### Technical Problem

However, there is a demand for a method for manufacturing a scroll member which can reduce costs and shorten a manufacturing period.

The present invention has been made in view of the above circumstances, and an object of the present invention is to provide a method for manufacturing a scroll member which can reduce costs and shorten a manufacturing period.

### Solution to Problem

In order to solve the above problems, the present invention provides the following means.

(1) A method for manufacturing a scroll member according to one aspect of the present invention includes a forging step of forging a forging material formed of an aluminum alloy without swaging.
(2) The method for manufacturing a scroll member according to (1) above may further include: a casting step of casting a round bar formed of an aluminum alloy containing Si: 8.0% to 12.5% by mass, Cu: 1.0% to 5.0% by mass, Mg: 0.2% to 1.3% by mass, and a remainder being Al and inevitable impurities; a cutting step of cutting the round bar into a forging material; and a forging step of placing the forging material in a die and forging the forging material, wherein, in the cutting step, the round bar may be lubricated with a carbon compound, and wherein, in the forging step, the forging material may be lubricated with the carbon compound.
(3) The method for manufacturing a scroll member according to (1) above may further include: a casting step of casting a round bar formed of an aluminum alloy containing Si: 8.0% to 12.5% by mass, Cu: 1.0% to 5.0% by mass, Mg: 0.2% to 1.3% by mass, Sr: 0.005% to 0.03% by mass, and a remainder being Al and inevitable impurities; a cutting step of cutting the round bar into a forging material; and a forging step of placing the forging material in a die and forging the forging material, wherein, in the cutting step, the round bar may be lubricated with a carbon compound, and wherein, in the forging step, the forging material may be lubricated with the carbon compound.
(4) The method for manufacturing a scroll member may further include: a casting step of casting a round bar formed of an aluminum alloy containing Si: 8.0% to 12.5% by mass, Cu: 1.0% to 5.0% by mass, Mg: 0.2% to 1.3% by mass, Ni: 0.1% to 2.0% by mass, and a remainder being Al and inevitable impurities; a cutting step of cutting the round bar into a forging material; and a forging step of placing the forging material in a die and forging the forging material, wherein, in the cutting step, the round bar may be lubricated with a carbon compound, and wherein, in the forging step, the forging material may be lubricated with the carbon compound.
(5) In the method for manufacturing a scroll member according to (2) to (4) above, the carbon compound may be an oil-based cutting agent.
(6) In the method for manufacturing a scroll member according to (2) to (5) above, the forging step may be carried out subsequent to the cutting step.
(7) In the method for manufacturing a scroll member according to (2) to (6) above, the forging step may include forging the forging material having the carbon compound on a surface thereof.

### Advantageous Effects of Invention

According to the present invention, it is possible to provide a method for manufacturing a scroll member which can reduce costs and shorten a manufacturing period.

### BRIEF DESCRIPTION OF DRAWINGS

[FIG. 1] A perspective view of a scroll member according to one aspect of the present invention.
[FIG. 2] A flowchart showing a procedure of a method for manufacturing a scroll member according to one aspect of the present invention.
[FIG. 3] A schematic view illustrating a state of a forging step in a method for manufacturing a scroll member according to one aspect of the present invention.
[FIG. 4] A schematic view illustrating a state of a forging step in a method for manufacturing a scroll member according to one aspect of the present invention and showing a state after FIG. 3.
[FIG. 5] A schematic view illustrating a state of a forging step in a method for manufacturing a scroll member according to a modification example of FIG. 3.
[FIG. 6] A schematic view illustrating a state of a forging step in a method for manufacturing a scroll member according to one aspect of the present invention and showing a state after FIG. 5.
[FIG. 7] A flowchart showing an example of a procedure of a conventional method for manufacturing a scroll member formed of an aluminum alloy and showing a procedure of a method for manufacturing a scroll member disclosed in Patent Document 1.

### DESCRIPTION OF EMBODIMENTS

A forging die for a scroll member according to one embodiment of the present invention and a method for manufacturing a scroll member using the die will be described below with reference to the drawings. The embodiments which will be shown below are specifically described to better understand the gist of the invention and do not limit the present invention unless otherwise specified. In addition, the drawings which will be used in the following description may be shown with the main parts being enlarged for convenience to make the features of the present invention easy to understand, and the size ratios of the respective components are not always the same as the actual ones.

### [Scroll member]

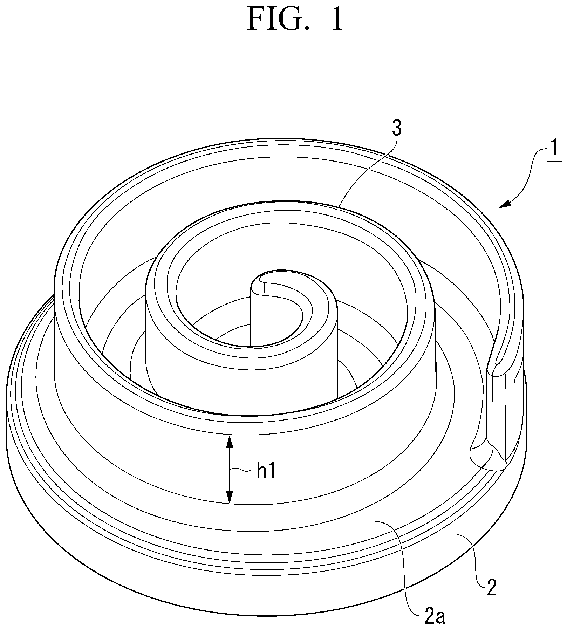

FIG. 1 is a perspective view of a scroll member according to one aspect of the present invention. According to the method for manufacturing a scroll member of the present invention, a scroll member 1 as shown in FIG. 1 is manufactured. The scroll member 1 shown in FIG. 1 has, for example, a disk-shaped flange 2 and a vane portion 3 which is a spiral wall portion protruding from one surface 2a of the flange 2 in a height direction. In the scroll member 1, the flange 2 and the vane portion 3 are integrally formed with each other by causing a forging material to plastically flow using a forging die, which will be described below.

A height h1 of the vane portion 3 from the one surface 2a of the flange 2 is, for example, 40 mm or less, preferably less than 30 mm, more preferably 25 mm or less, and even more preferably 20 mm or less. In addition, the height h1 of the vane portion 3 from the one surface 2a of the flange 2 can be set arbitrarily, and may be, for example, 10 mm or more.

A thickness of the vane portion 3 is, for example, 4.0 to 7.0 mm, and preferably 5.0 to 6.0 mm. The vane portion 3 is formed such that a ratio of the height h1 to the thickness is, for example, about 2 to 5 times.

The scroll member 1 is formed of, for example, an aluminum alloy in order to reduce the weight thereof. As a material for the aluminum alloy scroll, a Si-added aluminum alloy is generally used to impart wear resistance, and the added Si is crystallized as fine particles, which enhances wear resistance with a mating material. An example of a composition of the aluminum alloy used for the scroll member 1 includes Si (silicon): 8.0% to 12.5% by mass, Cu (copper): 1.0% to 5.0% by mass, Mg (magnesium): 0.2% to 1.3% by mass, and a remainder being Al (aluminum) and inevitable impurities.

Until the Si content becomes about 11% by mass, fine eutectic Si particles of a few micrometers in size are dispersed and crystallized in an Al matrix in proportion to the amount of Si added, which increases the wear resistance of this alloy. For this reason, the Si content is preferably high, and when the Si content is 8.0% by mass or more, a high wear resistance effect is exhibited for sliding parts such as scrolls. When the Si content exceeds 12.5% by mass, Si is crystallized as primary crystals, and the primary crystals tend to become coarse and reach several tens of µm in size. For this reason, a saw blade wears out during cutting, and an edge tip of a bit comes into contact with the primary crystals during cutting in post-processing to cause chipping of the edge tip, resulting in finishing problems, or when the primary crystals are unevenly distributed in a portion close to an outer surface of a forging where stress is likely to concentrate, the primary crystals can become fracture base points and cause a lack of mechanical strength. Therefore, there is preferably 12.5% by mass or less of Si.

When Cu is added in an amount of several percent by mass, Cu improves the strength of the Al matrix through subsequent heat treatment and also contributes to wear resistance. When there is 1.0% by mass or more of Cu, Cu is likely to contribute to improving strength, but when there is in excess of 5.0% by mass of Cu, the effect of improving strength becomes saturated. Therefore, there is 1.0% to 5.0% by mass of Cu.

Mg combines with Si to form fine precipitates of Mg₂Si after heat treatment, which contributes to hardening of the product. In addition, as a MgSiCu-based compound, it also becomes a precipitate after heat treatment and contributes to hardening of the product, and both increase strength. This effect is easily obtained when there is 0.2% by mass or more of Mg, and the effect does not improve when there is in excess of 1.3% by mass of the added Mg. In addition, the generation and inclusion of oxides during casting can cause defects. Therefore, there is 0.2% to 1.3% by mass of Mg.

In the present invention, 2.0% by mass or less of Ni may be added to the aluminum alloy as needed in order to increase the heat resistance strength. The amount of addition is effective when it exceeds 0.1% by mass, and when it is 2.0% by mass or less, a coarse crystallized product is less likely to form. Therefore, the amount of Ni added is preferably in the range of 0.1% to 2.0% by mass.

This aluminum alloy utilizes so-called eutectic Si as one factor in the wear resistance. In order to disperse this eutectic more uniformly and finely and to suppress the generation of coarse primary crystals, one or more elements selected from the group consisting of Sr, Ca, Na, and Sb may be added in an amount of 0.5% by mass or less in total. When contained in an aluminum alloy, there is preferably 0.05% to 0.5% by mass of Sb and preferably 0.005% to 0.05% by mass of Sr. Sr is particularly effective when added in a small amount, and Sr is preferably used because weight loss due to oxidation or the like during melting is small.

The scroll member 1 of the present invention is not limited to the above example. For example, an example of a composition of the aluminum alloy used for the scroll member 1 may be a composition including Si: 8.0% to 12.5% by mass, Cu: 1.0% to 5.0% by mass, Mg: 0.2% to 1.3% by mass, Sr: 0.005% to 0.03% by mass, and a remainder being Al and inevitable impurities.

### [Method for manufacturing scroll member]

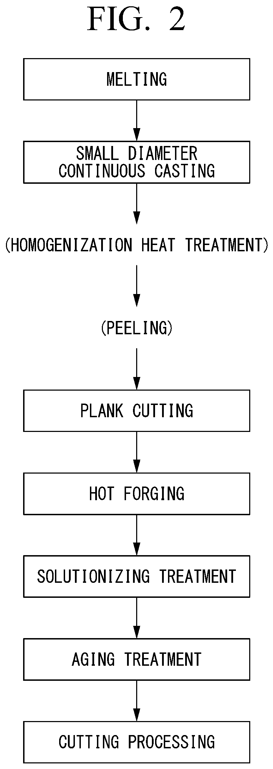

FIG. 2 is a flowchart showing a procedure of a method for manufacturing a scroll member according to one aspect of the present invention. The method for manufacturing a scroll member of the present invention includes a forging step of forging a forging material formed of an aluminum alloy without swaging. The method for manufacturing a scroll member according to one embodiment of the present invention includes, for example, a melting step, a casting step, a cutting step, a forging step, a solutionizing treatment step, an aging treatment step, and a cutting processing step in that order. In addition, a homogenizing treatment step and a peeling step may also be carried out between the forging step and the cutting step.

### (Melting step)

First, a raw material is melted to obtain an aluminum alloy having the above composition. That is, in the melting step, a raw material adjusted to the below composition proportions is melted so as to obtain an aluminum alloy having, for example, a composition including Si: 8.0% to 12.5% by mass, Cu: 1.0% to 5.0% by mass, Mg: 0.2% to 1.3% by mass, and a remainder being Al and inevitable impurities, a composition including Si: 8.0% to 12.5% by mass, Cu: 1.0% to 5.0% by mass, Mg: 0.2% to 1.3% by mass, and Sr: 0.005% to 0.03% by mass, and a remainder being Al and inevitable impurities, or a composition including Si: 8.0% to 12.5% by mass, Cu: 1.0% to 5.0% by mass, Mg: 0.2% to 1.3% by mass, Sr: 0.005% to 0.03% by mass, and Ni: 0.1% to 2.0% by mass, and a remainder being Al and inevitable impurities.

### (Casting step)

Next, the molten raw material is used to cast a round bar formed of an aluminum alloy. The casting is preferably carried out by continuous casting in parallel with the melting step. A diameter of the aluminum alloy round bar is a diameter of a recess 21 of a die 20A used in the forging step, which will described below, and is formed to be a size corresponding to an outer diameter of the flange 2 of the scroll member to be manufactured. For example, a round bar having a diameter of about 85 to 95 mm is formed.

### (Homogenization heat treatment step)

The round bar obtained by the casting step may be subjected to a homogenization heat treatment step. In the homogenization heat treatment step, the segregation of added elements that occurs during casting is eliminated to homogenize the composition, the supersaturated solid solution that occurs in solidification during casting is precipitated, and the metastable phase that is formed in solidification during casting is transformed into an equilibrium phase. The heating temperature in the homogenization heat treatment is, for example, in the range of 420°C or higher and 500°C or lower.

### (Peeling step)

Before the cutting step, the aluminum alloy round bar formed by casting may have its material surface chamfered by peeling. The peeling improves the accuracy of the material diameter and also improves the surface condition of the outer periphery.

### (Cutting step)

The round bar is then cut into a forging material. In the cutting step, the forging material is lubricated with a carbon compound, and the forging material having a surface lubricated is cut to be a predetermined thickness. During the cutting step, the entire surface of the forging material is lubricated with the carbon compound.

As the carbon compound, an oil-based cutting agent such as mineral oil or animal or vegetable oil can be used. As the carbon compound, either a water-soluble cutting oil or a water-insoluble cutting oil can be used. As the carbon compound, for example, one that does not contain graphite can be used.

### (Forging step)

Next, the forging material obtained by cutting in the cutting step is forged without swaging. For example, the forging step is a step that is carried out subsequent to the cutting step and is carried out in a state in which the carbon compound that is applied in the cutting step remains on the surface of the forging material. For this reason, in the forging step, the forging material is lubricated with the carbon compound. That is, the forging step includes forging the forging material having the carbon compound on a surface thereof. The forging step is carried out within a period during which the carbon compound used to lubricate the forging material, which is applied to the entire surface of the forging material including a cut surface, does not evaporate. The forging step is carried out, for example, within one month after the cutting step.

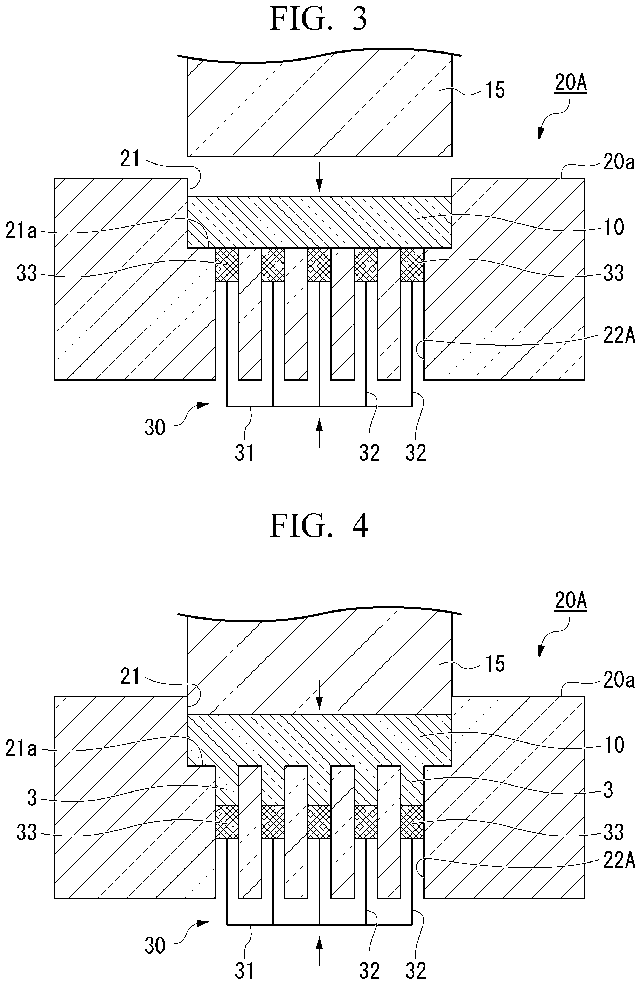

The forging step can be carried out using an apparatus such as that shown in FIG. 3. FIG. 3 is a schematic view illustrating a state of a forging step in a method for manufacturing a scroll member according to one aspect of the present invention. FIG. 4 is a schematic view illustrating a state of a forging step in a method for manufacturing a scroll member according to one aspect of the present invention and showing a state after FIG. 3. FIGS. 3 and 4 show cross sections of a forging material 10, a die 20A, a punch 15, and the like. Although a reference sign of the carbon compound is omitted in the drawing, the forging material 10 has the carbon compound on its surface as described above.

As shown in FIG. 3, the forging step is performed by pressing the forging material 10 with the die 20A and the punch 15. The die 20A is formed entirely from a die alloy for forging, such as chrome molybdenum steel or chrome molybdenum vanadium steel, for example. The die 20A has a recess 21 recessed in a depth direction perpendicular to an upper surface 20a, and a die space 22A extending in the depth direction from a bottom surface 21a of the recess 21, for example. The die space 22A passes through the die 20B in the depth direction of the recess 21.

In the recess 21, for example, a disk-shaped forging material 10 is placed during forging. The recess 21 only has to be formed to match the shape of the flange 2 (see FIG. 1) of the scroll member 1 to be forged and may have any inner shape other than a cylindrical shape of this embodiment, for example, a square tube shape.

The die space 22A is formed in a spiral shape that resembles the shape of the vane portion 3 of the scroll member 1 to be forged.

For example, a knockout pin 30 is inserted into the die space 22A of the die 20A. The knockout pin 30 includes a back pressure plate 31, a knock pin 32 extending in a direction perpendicular to the back pressure plate 31, and a knockout 33 provided at a tip end of the knock pin 32. The knockout pin 30 is configured to be connected to, for example, a back pressure device (not shown) and to be able to apply back pressure. The knock pin 32 and the knockout 33 are formed in a spiral shape that resembles the shape of the vane portion 3 of the scroll member 1 to be forged. The knockout pin 30 is provided so as to be movable in the depth direction of the die space 22A of the die 20A during forging. The height h1 of the vane portion 3 of the scroll member 1 is determined depending on a position of the knockout pin 30 at the end of the forging step.

The die 20A and the knockout 33 are lubricated with a liquid lubricant made by mixing graphite with water or mineral oil. The surfaces of the die 20A and the knockout 33 are lubricated by, for example, directly spraying the liquid lubricant with a spray.

At the start of the forging step, the knockout pin is inserted into the die space 22A up to near an upper end thereof in advance (FIG. 3). The upper end of the die space 22A is at the same height as the bottom surface 21a of the recess 21.

In the process that the punch 15 begins to press the forging material and the forging material 10 flows into the die space 22A to grow into a vane, pressure from the back pressure device in a direction opposite to a direction in which the punch 15 presses the forging material 10 is applied to a tip end of the vane through the back pressure plate 31, the knock pin 32, and the knockout 33, causing the vane to grow uniformly. In FIGS. 3 and 4, a direction in which the forging material 10 is pressed by the punch 15 and a direction of the back pressure which is applied to the forging material 10 by the knockout pin 30 are indicated by arrows.

During forging, the amount of metal flowing into the die space 22A can be made more uniform by applying back pressure. When the amount of metal flowing into the die space 22A can be made uniform, the uniformity of the height of the vane portion 3 can be improved. A surface pressure on the tip end of the vane portion 3 is, for example, 40 to 120 N/mm², and preferably 60 to 100 N/mm² at a constant back pressure.

In addition, the back pressure on the tip end of the vane portion, which is applied to the knockout pin 30, may be constant or may be changed over time from the initial back pressure. For example, the back pressure on the tip end of the vane portion may be maintained at an initial back pressure (Pfull) until the length of the vane portion reaches a predetermined length, and then the back pressure may be reduced over time after the length of the vane portion reaches the predetermined length. The final back pressure at the end of the forging step may be set to be less than half the initial back pressure (Pfull). By changing the back pressure so as to decrease over time as described above, the metal is pulled into the vane portion by the inflow of the metal, and thus it is possible to prevent the filling rate of the recess 21 from being reduced. At this time, the final pressure at the end of the forging step is set to be equal to or less than deformation stress of the forging material 10. The deformation stress is stress in a stress direction of the die space 22A, that is, a vane portion forming direction. If the back pressure is equal to or less than the deformation stress, a workpiece flowing into a vane forming portion will not be deformed by the back pressure. As a result, the forming accuracy of the vane portion is increased. Specifically, it is suitable that the back pressure be 40 to 120 N/mm², and it is desirable that the back pressure be 60 to 100 N/mm².

A depth d of the surface of the knockout 33 on a side of the recess 21 from the bottom surface 21a of the recess 21 at the end of the forging step corresponds to the height h1 of the vane portion 3 of the scroll member 1 to be formed. The depth d is, for example, 40 mm or less, preferably less than 30 mm, more preferably 25 mm or less, and even more preferably 20 mm or less.

The forging step described above may be performed by, for example, hot forging or cold forging. The heating temperature of the forging material 10 in the hot forging is, for example, in the range of 350°C or higher and 450°C or lower.

During forging, as the vane portion 3 is formed, there are cases where portions that are not lubricated with the carbon compound are partially exposed. However, by setting the depth d within this range, it is possible to prevent the vane portion 3 from becoming excessively large and to prevent the unlubricated portions from being exposed. It is possible to prevent seizure from occurring due to contact between the vane portion 3 to be formed and the die 20A when the unlubricated portion is exposed.

### (Solutionizing treatment step), (Aging treatment step)

As described above, the scroll member 1 having the vane portion 3 formed thereon with a predetermined height is preferably subjected to solutionizing treatment and aging treatment in order to enhance strength and wear resistance. The solutionizing treatment and the aging treatment are treatments in which a material is heated to a predetermined temperature, quenched, and then held at another predetermined temperature for a predetermined time again. For example, the temperature of the solutionizing treatment is preferably 490°C to 500°C, and after quenching in water, age hardening can be performed by selecting appropriate conditions such as 160°C to 210°C (preferably 170°C to 190°C) for 1 to 8 hours (preferably 3 to 6 hours), thereby obtaining a forging with sufficient hardness of about HRB 70 to 85.

Furthermore, the forging after the heat treatment can be assembled into a compressor or the like as the scroll member 1 by precision cutting, to adjust mainly the height h1 and shape of the vane portion 3, as necessary.

By the method for manufacturing a scroll member described above, the scroll member 1 as shown in FIG. 2 can be manufactured.

According to the method for manufacturing a scroll member according to this embodiment, the scroll member 1 can be manufactured without carrying out a hot swaging step and a forging material lubrication step that are required in the conventional method as shown in FIG. 7 and while suppressing the occurrence of seizure. According to the method for manufacturing a scroll member according to this embodiment, it is possible to provide a method for manufacturing a scroll member which can reduce costs and shorten a manufacturing period.

In the method for manufacturing a scroll member according to this embodiment, after the cutting step, the forging step is carried out without carrying out the swaging step. For this reason, the carbon compound used to lubricate the round bar in the cutting step does not volatilize before the forging step, and there is no need to perform separate lubrication of the forging material. Conventionally, it was thought that different materials had to be used as a lubricant for the forging material and a lubricant for the round bar. Specifically, in the forging step, since both the forging material and the die are made of metal, it has been thought that it is necessary to use a lubricant containing graphite, which is not contained in cutting oil, in order to prevent seizure. However, by setting the height of the vane portion 3 to be formed within the above-described range, even when the forging step is carried out in a state in which the carbon compound used in the cutting step is applied to the carbon compound without newly performing a lubrication treatment on the forging material, it is possible to prevent the occurrence of lubrication shortage and seizure.

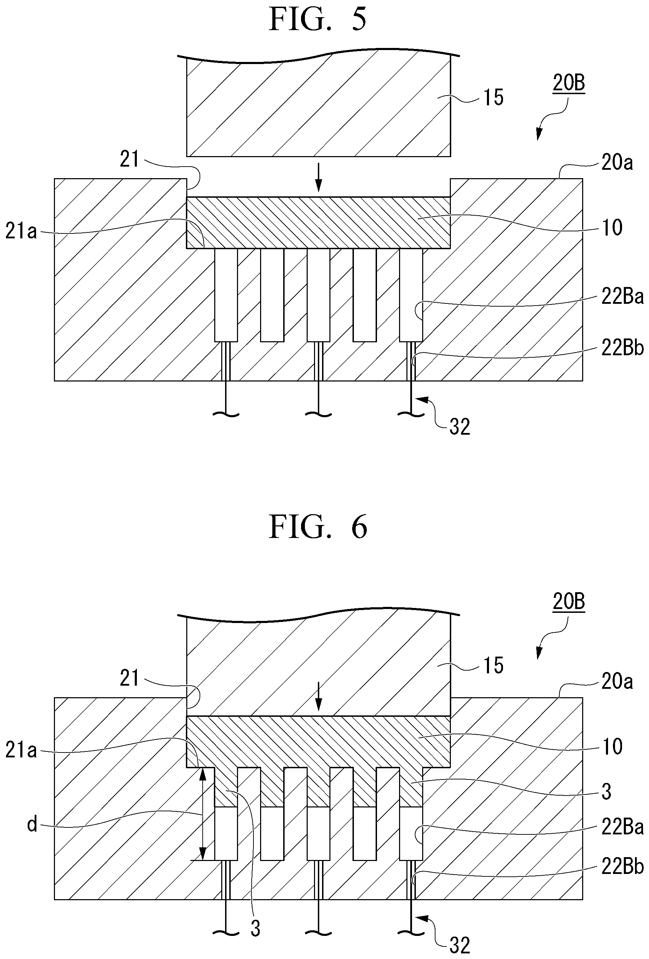

The present invention is not necessarily limited to the embodiments described above, and various modifications can be made without departing from the spirit of the present invention. For example, a forging step using a die as shown in FIGS. 5 and 6 may be performed.

FIG. 5 is a schematic view illustrating a state of a forging step in a method for manufacturing a scroll member according to a modification example of FIG. 3. FIG. 6 is a schematic view illustrating a state of a forging step in a method for manufacturing a scroll member according to one aspect of the present invention and showing a state after FIG. 5. FIGS. 5 and 6 show cross sections of a forging material 10, a die 20B, a punch 15, and the like.

The die 20B shown in FIG. 5 differs from the die 20A shown in FIGS. 3 and 4 in that the die space 22A is not provided but a groove portion 22Ba is provided. In FIGS. 5 and 6, the same components as those in the die 20A are denoted by the same reference signs and the description thereof will be omitted.

The groove portion 22Ba is formed in a spiral groove shape that resembles the shape of the vane portion 3 of the scroll member 1 to be forged. In the die 20B, most of the area of the groove portion 22Ba does not pass through a recess 21 in the depth direction, unlike the die space 22A, and one end thereof is closed. That is, the groove portion 22Ba of the die 20B has a bottom portion 22b in the depth direction of the recess 21. A depth d from a bottom surface 21a of the recess 21 to the bottom portion of the groove portion 22Ba is the height h1 of the vane portion 3 of the scroll member 1 to be formed. The depth d from the bottom surface 21a of the recess 21 to the groove portion 22Ba is, for example, 40 mm or less, preferably less than 30 mm, more preferably 25 mm or less, and even more preferably 20 mm or less.

As described above, the groove portion 22Ba of the die 20B includes the closed bottom portion, and no back pressure is applied during the forging step.

On the other hand, the groove portion 22Ba is provided with a hole portion 22Bb into which a pin member (knock pin) 32 for extruding out and removing the scroll formed in a part thereof is inserted. The maximum diameter of the hole portion 22Bb is formed to be smaller than the diameter of the groove portion 22Ba. In addition, in FIGS. 5 and 6, for the sake of convenience of explanation, the diameter of the hole portion 22Bb is shown greater than the diameter of the pin member 32. However, it is preferable that the diameter of the hole 22Bb be narrowed to the extent that the pin member 32 can extrude the forging, i.e., that the diameter of the pin member 32 is equal to the diameter of the hole portion 22Bb. In addition, during the forging step, the tip end of the pin member 32 may be flush with the bottom surface of the groove portion 22Ba or may be located below the bottom surface of the groove portion 22Ba.

The forging step using the die 20B can be carried out under conditions where the die 20B is lubricated. A lubricant used to lubricate the die 20B can be similar to the carbon compound that can be used to lubricate the die 20A.

Even when the forging step is performed using the die 20B, the forging material obtained by cutting in the cutting step is forged without swaging. For example, the forging step is a step that is carried out subsequent to the cutting step and is carried out in a state in which the carbon compound that is applied in the cutting step remains on the surface of the forging material.

Even when the forging material formed of an aluminum alloy is forged without swaging using the die 20B having the groove portion 22Ba with one end closed as shown in FIGS. 5 and 6, the swaging step and the forging material lubrication step can be omitted and the occurrence of seizure can be suppressed, thereby manufacturing a scroll member. Therefore, according to the present invention, it is possible to provide a method for manufacturing a scroll member which can reduce costs and shorten a manufacturing period. In the method for manufacturing a scroll of the above embodiments, in a case in which the addition of Sr, Ca, Na, and Sb is not intended in the melting and casting steps, these elements are also treated as inevitable impurities. The total amount of inevitable impurity elements in the aluminum alloy is preferably 0.5% by mass or less.

The present invention is not necessarily limited to the embodiments described above, and various modifications can be made without departing from the spirit of the present invention.

For example, the upper limit values and/or lower limit values of the numerical ranges described in this specification can be combined in any manner to define a preferred range. For example, the upper limit values and lower limit values of the numerical ranges can be combined in any manner to define a preferred range, the upper limit values of the numerical ranges can be combined in any manner to define a preferred range, and the lower limit values of the numerical ranges can be combined in any manner to define a preferred range.

In addition, throughout the present disclosure, the singular expressions should be understood to include the plural concept, unless otherwise specified. Therefore, singular articles (for example, in the English language, "a," "an," "the," or the like) should be understood to include the plural concept, unless otherwise specified.

### INDUSTRIAL APPLICABILITY

According to the method for manufacturing a scroll member according to the above embodiments, the forging step can be carried out in a state in which the forging material is lubricated with the carbon compound used to cut the forging material, and thus it is possible to omit the swaging step which requires a treatment in a high-temperature environment and the lubrication step for the forging material. For this reason, the number of steps required to manufacture the scroll member, the manufacturing costs, and the manufacturing period can be significantly reduced.

### REFERENCE SIGNS LIST

1 Scroll member
2 Flange
2a One surface
3 Vane portion
10 Forging material
15 Punch
20a Upper surface
20A, 20B Die
21 Recess
21a Bottom surface
22A Die space
22Ba Groove portion
22Bb Hole portion
30 Knockout pin
31 Back pressure plate
32 Knock pin
33 Knockout

## Claims

1. A method for manufacturing a scroll member comprising a forging step of forging a forging material formed of an aluminum alloy without swaging.

2. The method for manufacturing a scroll member according to claim 1, further comprising:
a casting step of casting a round bar formed of an aluminum alloy containing Si: 8.0% to 12.5% by mass, Cu: 1.0% to 5.0% by mass, Mg: 0.2% to 1.3% by mass, and a remainder being Al and inevitable impurities;
a cutting step of cutting the round bar into a forging material; and
a forging step of placing the forging material in a die and forging the forging material,
wherein, in the cutting step, the round bar is lubricated with a carbon compound, and
wherein, in the forging step, the forging material is lubricated with the carbon compound.

3. The method for manufacturing a scroll member according to claim 1, further comprising:
a casting step of casting a round bar formed of an aluminum alloy containing Si: 8.0% to 12.5% by mass, Cu: 1.0% to 5.0% by mass, Mg: 0.2% to 1.3% by mass, Sr: 0.005% to 0.03% by mass, and a remainder being Al and inevitable impurities;
a cutting step of cutting the round bar into a forging material; and
a forging step of placing the forging material in a die and forging the forging material,
wherein, in the cutting step, the round bar is lubricated with a carbon compound, and
wherein, in the forging step, the forging material is lubricated with the carbon compound.

4. The method for manufacturing a scroll member according to claim 1, further comprising:
a casting step of casting a round bar formed of an aluminum alloy containing Si: 8.0% to 12.5% by mass, Cu: 1.0% to 5.0% by mass, Mg: 0.2% to 1.3% by mass, Ni: 0.1% to 2.0% by mass, and a remainder being Al and inevitable impurities;
a cutting step of cutting the round bar into a forging material; and
a forging step of placing the forging material in a die and forging the forging material,
wherein, in the cutting step, the round bar is lubricated with a carbon compound, and
wherein, in the forging step, the forging material is lubricated with the carbon compound.

5. The method for manufacturing a scroll member according to any one of claims 2 to 4, wherein the carbon compound is an oil-based cutting agent.

6. The method for manufacturing a scroll member according to any one of claims 2 to 4 or claim 3, wherein the forging step is carried out subsequent to the cutting step.

7. The method for manufacturing a scroll member according to any one of claims 2 to 4, wherein the forging step includes forging the forging material having the carbon compound on a surface thereof.
